# EUROPÄISCHE PATENTSCHRIFT

(11) **EP 0 395 954 B1**
(45) Veröffentlichungstag und Bekanntmachung des Hinweises auf die Patenterteilung: **10.03.1993**
(21) Anmeldenummer: 90107527.5
(22) Anmeldetag: 20.04.1990
(51) Int. Cl.: A01M 1/20, A01M 1/02

(54) **Köderdose aus formgespritztem Kunststoff für Insekten, wie Ameisen und ähnliche Tierchen**
Bait box formed by injection moulding of plastic for insects, like ants and similar small animals
Boîte d'appât en matières synthétiques moulée par injection pour insectes, tels que fourmis ou petits animaux similaires

(30) Priorität: 03.05.1989 DE 3914566
(43) Veröffentlichungstag der Anmeldung: 07.11.1990
(73) Patentinhaber: BAYER AG, 51368 Leverkusen (DE)
(72) Erfinder: Kanthak, Franz, Dipl.-Ing., D-4018 Langenfeld (DE); Kutscher, Hans, D-5090 Leverkusen 1 (DE)

## Beschreibung

Die Erfindung betrifft eine Köderdose aus formgespritztem Kunststoff für Insekten, gemäß Oberbegriff des Patentanspruches.

Die Insekten müssen bei der durch die herausgebrochene Lasche freigelegte Öffnung einen innen senkrecht abfallenden Rand überwinden, was auf einige Insekten nicht nur als physische Hemmschwelle wirkt, sondern auch eine psychische auslöst und sie vom Eindringen in das Innere der Köderbox abhält.

Aus EP-B1-0 024402 ist eine elektrisch arbeitende Insektenfalle mit einer zum Inneren hin abfallenden Fläche bekannt. Diese ist mit elektrischen Leitern belegt, und durch Stromimpulse sollen die Insekten betäubt und in den mittigen Auffangraum geschleudert werden. Diese Fläche endet über dem Auffangraum mit einer freien Kante.

Aus CH-A-604 488 ist eine Ködervorrichtung für Insekten bekannt, bei der das Unterteil im Bereich der Einstiegöffnung eine von dieser Öffnung zum Köder hin abfallende, bis zu dessen Niveau herabreichende Erhebung aufweist.

Es besteht die Aufgabe, eine Köderdose aus formgespritztem Kunststoff für Insekten, wie Ameisen und ähnliche Tierchen, zu schaffen, welche die Insekten hindernisfrei zum Köder gelangen läßt, aber gleichzeitig die Umkehr erschwert.

Diese Aufgabe wird gemäß Kennzeichen des Patentanspruches gelöst.

Dadurch wird erreicht, daß die Insekten einen bequemen, hindernisfreien Weg zum Köder haben und deshalb keinen Anlaß zur Umkehr sehen. Die Stufen der Stege haben den Vorteil, daß die Insekten beim Herabkriechen auf dem Weg zum Köder besser Halt finden. Diese Stufen können auch die Form von einfachen Rippen auf der Oberfläche haben. Die Höhe der Stufen braucht nur Bruchteile von mm betragen. Die Stege bewirken, daß die Insekten auf diesen Stegen zum Köder kriechen müssen, so daß bei gleichzeitigem Hineinkriechen mehrerer Insekten diese sich nicht gegenseitig stören können. Insbesondere wird den Insekten die Umkehr auf den schmalen Stegen erschwert, da sie ein exaktes Rückwärtsbewegen scheuen.

In der Zeichnung ist die neue Köderdose in einem Ausführungsbeispiel rein schematisch dargestellt und nachstehend näher erläutert. Es zeigen:
Fig. 1 die Köderdose im Schnitt gemäß Linie A-B in Fig. 2 bzw. Fig. 3,
Fig. 2 das Unterteil der Köderdose in der Draufsicht und
Fig. 3 das Oberteil der Köderdose in der Draufsicht.

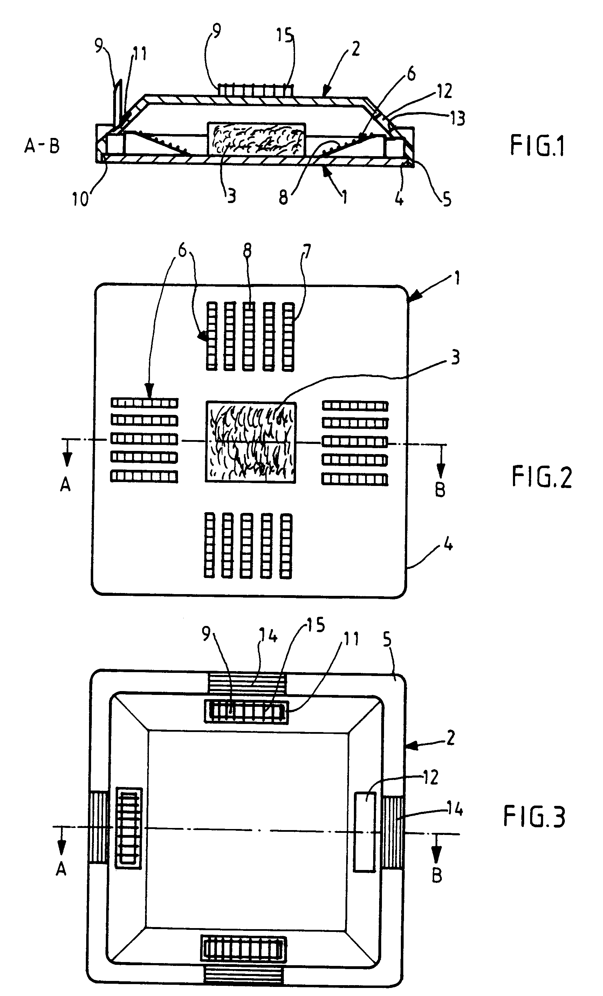

In Fig. 1 bis 3 besteht die quadratisch gestaltete Köderdose aus einem flachen Unterteil 1 und einem haubenartigen Oberteil 2, welche beide aus Kunststoff durch Spritzgießen hergestellt sind. Zwischen ihnen ist ein Köder 3 auf dem Unterteil 1 aufgeklebt angeordnet. Die Ränder 4 und 5 von Unterteil 1 und Oberteil 2 sind miteinander verklebt. Auf dem Unterteil 1 sind außerdem bis zu dessen Niveau reichende Erhebungen 6 angeordnet, welche zum Köder 3 hin abfallen und aus mehreren in Richtung zum Köder 3 verlaufenden, parallelen Stegen 7 bestehen. Sie weisen Stufen 8 in Form von querverlaufenden Rippen geringer Höhe auf. Das Oberteil 2 ist über den Erhebungen 6 mit Aufbrechlaschen 9 versehen, welche senkrecht zur Verbindungsebene 10 von Unterteil 1 und Oberteil 2 nach oben weisen. Am Übergang zum eigentlichen Oberteil weisen die Aufbrechlaschen 9 eine umlaufende Sollbruchstelle 11 auf, welche nach dem Herausbrechen der Aufbrechlasche 9 (siehe rechte Seite in Fig. 1 bzw. Fig. 2) die gebildete Öffnung 12 begrenzt. Der untere Rand 13 derÖffnung 12 stimmt mit dem höchsten Punkt der Erhebung 6 überein. Der umlaufende Rand 5 des Oberteils 2, welcher den Rand 4 des Unterteils 1 übergreift, ist im Bereich der Aufbrechlaschen 9 abgeschrägt und mit Kletterrippen 14 versehen. Die Aufbrechlaschen 9 besitzen selbst ebenfalls Rippen 15, damit sie griffiger sind.

## Patentansprüche

1. Köderdose aus formgespritztem Kunststoff für Insekten, wie Ameisen und ähnliche Tierchen, bestehend aus einem Unterteil (1) und einem damit verbundenen Oberteil (2), zwischen denen ein Köder (3) angeordnet ist, wobei eines mit mindestens einer eine Öffnung (12) freigebende, von einer Sollbruchstelle (11) umgebene Aufbrechlasche (9) versehen ist, das Oberteil (2) haubenartig gestaltet ist und die Aufbrechlasche (9) senkrecht zur Verbindungsebene des Oberteils (2) mit dem Unterteil (1) angeordnet ist, wobei das Unterteil (1) im Bereich der Aufbrechlasche (9) bzw. der damit zu bildenden Öffnung (12) eine von dieser Öffnung (12) zum Köder (3) hin abfallende, bis zu dessen Niveau herabreichende Erhebung (6) aufweist, dadurch gekennzeichnet, daß die Erhebung (6) aus einzelnen parallelen, in Richtung zum Köder (3) verlaufenden Stegen (7) besteht, welche Stufen (8) aufweisen.

## Claims

1. Bait box, made from injection-moulded plastic, for insects such as ants and similar small creatures, comprising a bottom part (1) and a top part (2) connected therewith between which a bait (3) is disposed, one of the parts being provided with at least one break-open tab (9), which frees an opening (12) and is surrounded by a target rupture point (11), the top part (2) being shaped like a hood and the break-open tab (9) being disposed perpendicularly to the connecting plane of the top part (2) with the bottom part (1), the bottom part (1) exhibiting, in the area of the break-open tab (9) or in the area of the opening (12) to be formed therewith, an elevation (6) sloping down from this opening (12) towards the bait (3) and reaching down to the level of the said bait, characterised in that the elevation (6) comprises individual bars (7), running parallel in the direction of the bait (3), which exhibit steps (8).

## Revendications

1. Boîte d'appât pour insectes tels que fourmis et bestioles similaires, en matière plastique moulée par injection, composée d'une partie inférieure (1) et d'une partie supérieure (2) qui lui est reliée, et entre lesquelles est disposé un appât (3), une des parties étant munie d'au moins une patte de rupture (9) libérant un orifice (12), et entourée d'un site (2) destiné à la rupture (11), la partie supérieure (2) ayant une forme convexe et la patte de rupture (9) étant perpendiculaire au plan de liaison entre la partie supérieure (2) et la partie inférieure (1), et la partie inférieure (1) présentant à proximité de la patte de rupture (9) ou de l'orifice (12) à former à l'aide de cette dernière un bossage (6) incliné de cet orifice (12) jusqu'à l'appât (3) descendant jusqu'à son niveau, caractérisée en ce que le bossage (6) est composé de différentes passerelles (7), parallèles, s'étendant en direction de l'appât (3) et qui présentent des marches (8).
